# EUROPEAN PATENT APPLICATION

(11) **EP 2 988 393 A1**
(43) Date of publication of application: **24.02.2016**
(21) Application number: 14181433.5
(22) Date of filing: 19.08.2014
(51) Int. Cl.: H02J 7/35, H02J 3/14, G07F 17/00, H02J 7/00

(54) **Automatic vending machine management control box**

(71) Applicant: International Currency Technologies Corporation, Taipei (TW)
(72) Inventor: Chien, Tien-Yuan, xxx Taipei (TW); Chan, Shao-Po, xxx Taipei (TW); Chen, Wei-Chin, xxx Taipei (TW)
(74) Representative: Glawe, Delfs, Moll

(57) **Abstract**

An automatic vending machine management control box includes a power supply unit including first and second solar panels, a battery charger module and first and second rechargeable battery sets, vending machine controller, peripheral apparatuses, and a power monitoring unit including a microcontroller for measuring the power level of the first and second rechargeable battery sets and controlling the battery charger module to charge the first and second rechargeable battery set, a power switch module controllable by the microcontroller to switch on/off the connection between the first rechargeable battery set, the second rechargeable battery set, the vending machine controller and each peripheral apparatus, and a current monitoring module for enabling the microcontroller to control the power switch module in cutting off power supply from each peripheral apparatus that is abnormal in power consumption, protecting the first and second rechargeable battery sets from over-discharge damage.

## Description

### BACKGROUND OF THE INVENTION

### 1.Field of the Invention:

The present invention relates to the arrangement of the power supply system of an automatic vending machine and more particularly, to an automatic vending machine management control box, which monitors the power consumption status of the peripheral apparatuses and automatically cuts off power supply from the peripheral apparatus that is in trouble, protecting rechargeable battery sets from over-discharge damage and prolonging their lifespan.

### 2. Description of the Related Art:

Following fast development of modern technology, people accelerate their pace of life and require a better quality of life with more convenience and rapidness. Therefore, various automatic vending machines, automatic teller machines and bill acceptors are used in public places to sell different products or to provide different consumer services without serviceman. These automatic vending machines, automatic teller machines and bill acceptors are highly invited for the advantage of saving much labor and bringing convenience to people.

Further, advanced automatic vending machines provide added functions to achieve the purposes of unmanned operation and self-checkout. Further, automatic vending machines are used everywhere to sell different products 24 hours a day. These automatic vending machines are highly invited for the advantage of saving much labor and bringing convenience to people. However, an automatic vending machine consumes much power supply when started up. In order to save power consumption, automatic vending machines commonly provide a standby (sleep) mode. The automatic vending machines enter the standby (sleep) mode when remaining idle for too long. When in the standby mode, the machine has a solid of flashing amber light, indicating that there is still power but the internal peripheral apparatuses such as card reader, coin exchanger, coin acceptor, bill accepter, and etc. are in the standby mode.

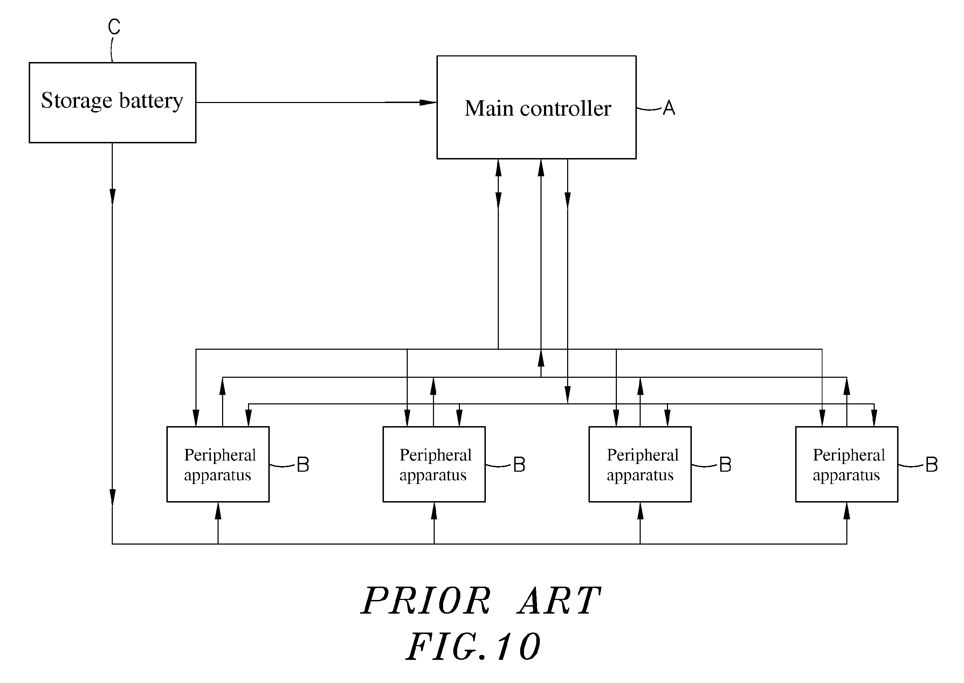

FIG. 10 is a system block diagram of an automatic vending machine according to the prior art. According to this design, the automatic vending machine comprises a main controller **A** mounted in the housing thereof, and a plurality of peripheral apparatuses **B** electrically connected to the main controller **A**, and a storage battery **C** electrically connected to the main controller **A** for providing the main controller **A** and the peripheral apparatuses **B** with the necessary working power supply. However, because the peripheral apparatuses **B** consume power supply from the storage battery **C,** the storage battery **C** can be over-discharged and damaged or failed in case of power consumption abnormality in one peripheral apparatus **B.** If the storage battery **C** is damaged or failed, the business operator must send a maintenance person to the site in trouble to replace the storage battery **C.**

Therefore, it is desirable to provide a power supply system for automatic vending machine that eliminates the aforesaid problems.

### SUMMARY OF THE INVENTION

The present invention has been accomplished under the circumstances in view. It is therefore the main object of the present invention to provide an automatic vending machine management control box for automatic vending machine, which eliminates the drawbacks of the aforesaid prior art design. To achieve this and other objects of the present invention, an automatic vending machine management control box in accordance with the present invention comprises a power supply unit, a power monitoring unit, a vending machine controller (VMC) and a plurality of peripheral apparatuses. The power supply unit comprises a first solar panel and a second solar panel arranged in parallel, a battery charger module electrically connected with the first solar panel and the second solar panel for receiving electrical energy therefrom, and a first rechargeable battery set and a second rechargeable battery set respectively electrically connected to and respectively chargeable by the first solar panel and the second solar panel through the battery charger module. The power monitoring unit comprises a microcontroller electrically coupled with the first rechargeable battery set and the second rechargeable battery set of the power supply unit and adapted for measuring the quantity of electricity of the first rechargeable battery set and the second rechargeable battery set and controlling the battery charger module to charge the first rechargeable battery set and the second rechargeable battery set, a power switch module electrically coupled with the microcontroller, the first rechargeable battery set and the second rechargeable battery set of the power supply unit, the vending machine controller (VMC) and the peripheral apparatuses and controllable by the microcontroller to switch on/off the connection between the first rechargeable battery set, the second rechargeable battery set, the vending machine controller (VMC) and each peripheral apparatus, and a current monitoring module comprising electrically coupled between the power switch module and the peripheral apparatuses. Further, the current monitoring module comprises at least one current shunt monitor electrically coupled to the microcontroller and adapted for monitoring power consumption status of each peripheral apparatus for enabling the microcontroller to control the power switch module in cutting off power supply from each peripheral apparatus that is abnormal in power consumption, protecting the first rechargeable battery set and the second rechargeable battery set from over-discharge damage and prolonging the lifespan of the first rechargeable battery set and the second rechargeable battery set.

Further, each current shunt monitor of the current monitoring module comprises a sense resistor therein. The sense resistor of the current monitoring module of the power monitoring unit in each current shunt monitor converts the electric current passing therethrough into a voltage signal that is delivered through two paralleled current-limit resistors to limit the current, and then filtered through a filter capacitor, and then inputted into an INA212, and then fed back to an analog-to-digital converter (ADC) of the microcontroller, enabling the microcontroller to monitor the power consumption status of the peripheral apparatuses through the current monitoring module during the power-saving (sleep) mode or non-power-saving (standby or normal working) mode. If the microcontroller detected an abnormality of the power consumption of one peripheral apparatus, the microcontroller immediately controls the power switch module to cut off power supply the peripheral apparatus in trouble, protecting the first rechargeable battery set and the second rechargeable battery set from over-discharge damage.

The power monitoring unit further comprises a memory module. The memory module comprises a flash RAM (random access memory) and a FRAM (ferroelectric random access memory) electrically coupled to the microcontroller for recording transaction data, error message, abnormal events and predetermined data. The power monitoring unit further comprises a wireless transmission module electrically coupled to the microcontroller for wireless communication with a remote maintenance center to transmit storage data from memory module to said remote maintenance center. Further, the memory module receives and stores communication data content and/or detection information (such as motor error/service inquire message, transaction messages from the peripheral apparatuses such as received amount, amount of commodity purchased, discharge of commodity and etc., and message of peripheral apparatus abnormality). The management personnel can connect an external USB storage device (not shown) to the connector module to update the internal programs in the motor error/service inquire message, transaction messages from the peripheral apparatuses and to fetch storage data from the memory module. Further, the wireless communication module of the power monitoring unit can transmit data or report message to the remote maintenance center, enabling the management personnel to monitor the operation of the vending machine on the real time at a remote place.

### BRIEF DESCRIPTION OF THE DRAWINGS

FIG. 1 is a system block diagram of an automatic vending machine management control box in accordance with the present invention (I).
FIG. 2 is a system block diagram of an automatic vending machine management control box in accordance with the present invention (II).
FIG. 3 is a circuit block diagram of the automatic vending machine management control box in accordance with the present invention.
FIG. 4 is a circuit diagram of the circuit of the automatic vending machine management control box for power consumption abnormality monitoring in accordance with the present invention (I).
FIG. 5 is a circuit diagram of the circuit of the automatic vending machine management control box for power consumption abnormality monitoring in accordance with the present invention (II).
FIG. 6 is a circuit diagram of the circuit of the automatic vending machine management control box for power consumption abnormality monitoring in accordance with the present invention (III).
FIG. 7 is a circuit diagram of the circuit of the automatic vending machine management control box for battery charger power level monitoring and charge switching operation in accordance with the present invention.
FIG. 8 is a flow chart of a power consumption abnormality monitoring process of the automatic vending machine management control box in accordance with the present invention.
FIG. 9 is a flow chart of a battery charger power level monitoring and charge switching process of the automatic vending machine management control box in accordance with the present invention.
FIG. 10 is a system block diagram of an automatic vending machine according to the prior art.

### DETAILED DESCRIPTION OF THE PREFERRED EMBODIMENT

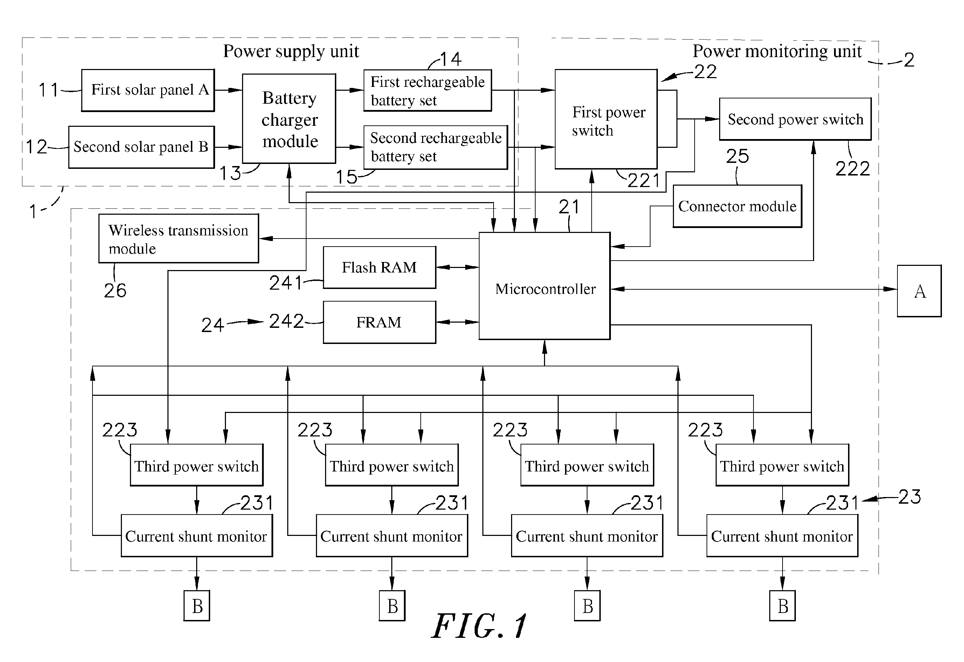

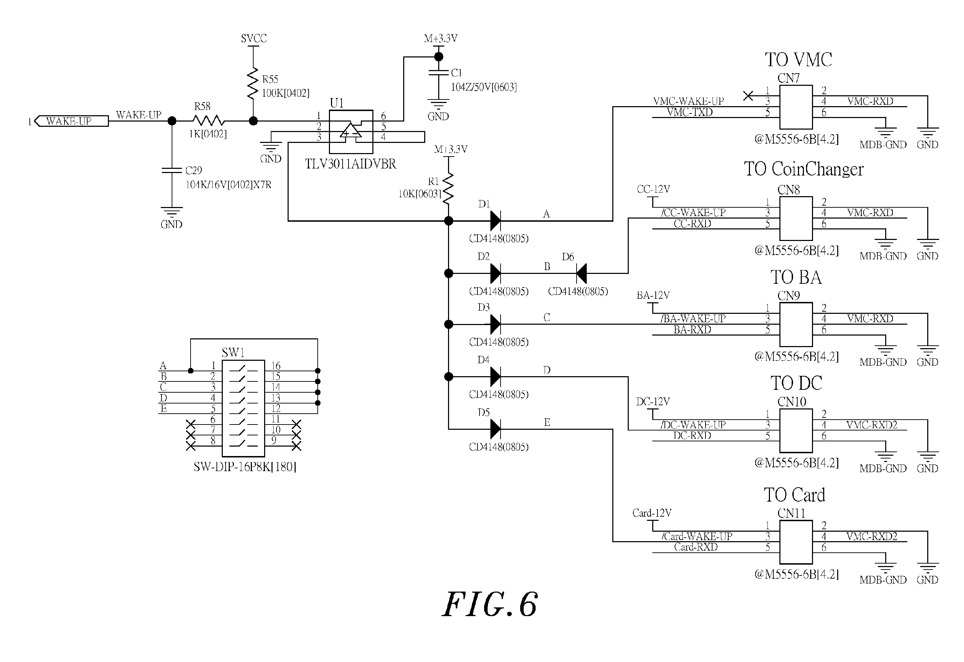

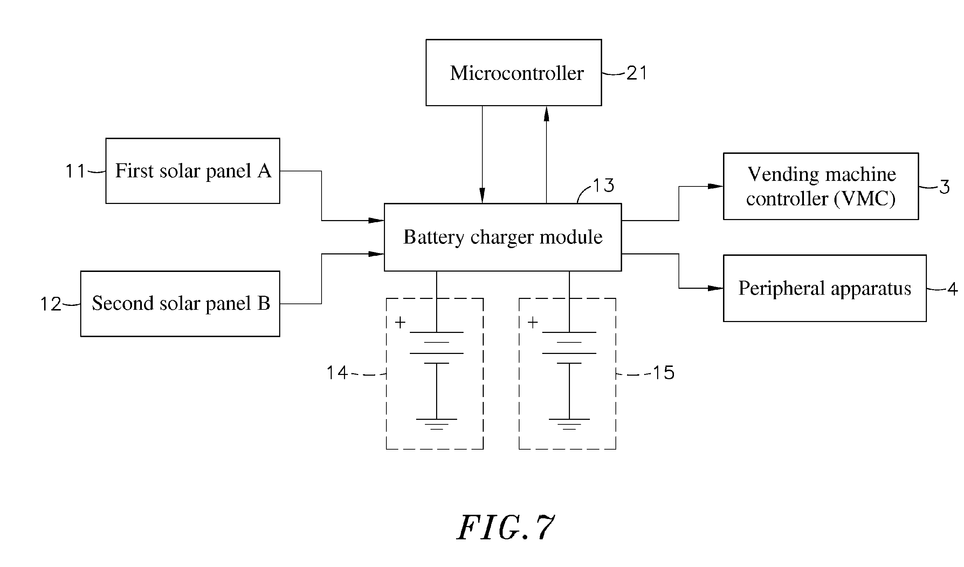

Referring to FIGS. 1-7, an automatic vending machine management control box in accordance with the present invention is shown. The automatic vending machine management control box comprises a power supply unit **1**, a power monitoring unit **2**, a vending machine controller (VMC) **3**, and peripheral apparatuses **4.**

The power supply unit **1** comprises a first solar panel A **11** and a second solar panel B **12** arranged in parallel, a battery charger module **13** electrically connected with the first solar panel A **11** and the second solar panel B **12** for receiving electrical energy therefrom, and a first rechargeable battery set **14** and a second rechargeable battery set **15** respectively electrically connected to and chargeable by the battery charger module **13.**

The power monitoring unit **2** comprises a microcontroller **21** electrically coupled with the first rechargeable battery set **14** and the second rechargeable battery set **15** of the power supply unit **1** for measuring the quantity of their electricity, a power switch module **22** comprising a first power switch **221** electrically coupled with the microcontroller **21** and the first rechargeable battery set **14** and the second rechargeable battery set **15** of the power supply unit **1** and controlled by the microcontroller **21** to switch on/off the first rechargeable battery set **14** and the second rechargeable battery set **15,** a second power switch **222** electrically coupled with the microcontroller **21**, the first power switch **221** and the vending machine controller (VMC) 3 and controlled by the microcontroller **21** to switch on/off the vending machine controller (VMC) **3** and a plurality of third power switches **223** respectively electrically coupled with the microcontroller **21**, the second power switch **223** and the peripheral apparatuses **4** and respectively controllable by the microcontroller **21** to switch on/off the peripheral apparatuses **4**, a current monitoring module **23** comprising a plurality of current shunt monitors **231** respectively electrically coupled between the third power switches **223** of the power switch module **22** and the peripheral apparatuses **4** for monitoring abnormal shunt current being delivered to the peripheral apparatuses **4** and a sense resistor **232** installed in each current shunt monitor **231** for converting the electric current passing therethrough into a voltage signal, a memory module **24** comprising a flash RAM (random access memory) **241** and a FRAM (ferroelectric random access memory) **242** electrically coupled to the microcontroller **21** for storing data, a connector module **25**, for example, USB module electrically coupled to the microcontroller **21** for the connection of external devices by a cable or cables, and a wireless transmission module **26** electrically coupled to the microcontroller **21** for wireless communication with a remote maintenance center (not shown). The wireless communication module **26** can be configured subject to GSM, GPRS, RF or 3G technologies.

The vending machine controller (VMC) **3** is electrically coupled with the microcontroller **21** of the power monitoring unit **2** and the peripheral apparatuses **4** by a respective series bus interface such as multi-drop bus (MDB) or RS-232 interface for receiving communication data content or monitoring information.

The peripheral apparatuses **4** are respectively electrically coupled with the microcontroller **21**, the current shunt monitors **231** of the current monitoring module **23** and the vending machine controller (VMC) **3.** In this embodiment, the number of the peripheral apparatuses **4** is four, including one card reader, one document checker, one bill acceptor and one coin changer or acceptor. However, this arrangement is not a limitation. In actual application, the number and types of the peripheral apparatuses **4** can be changed to meet actual requirements.

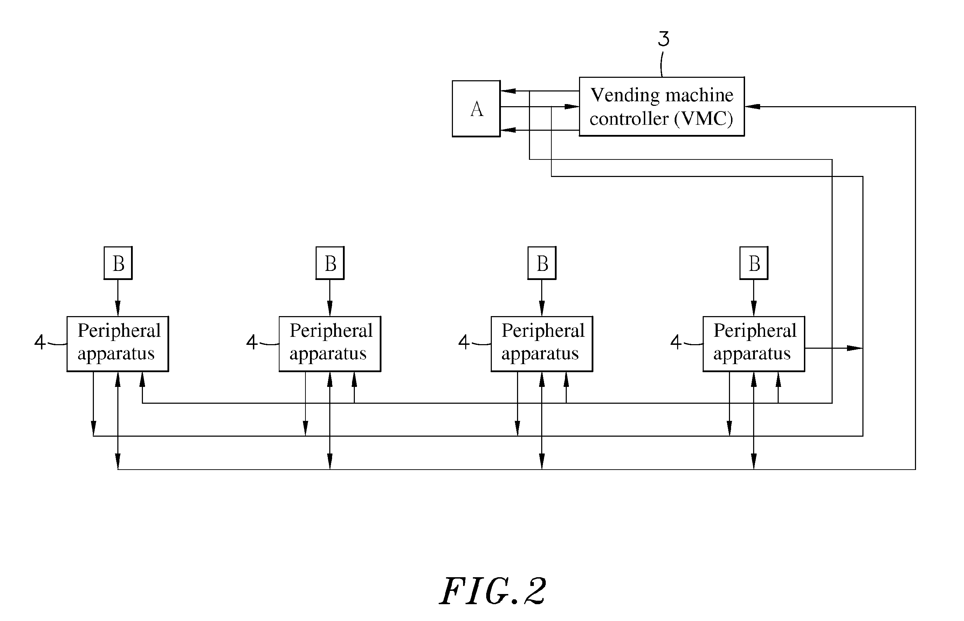

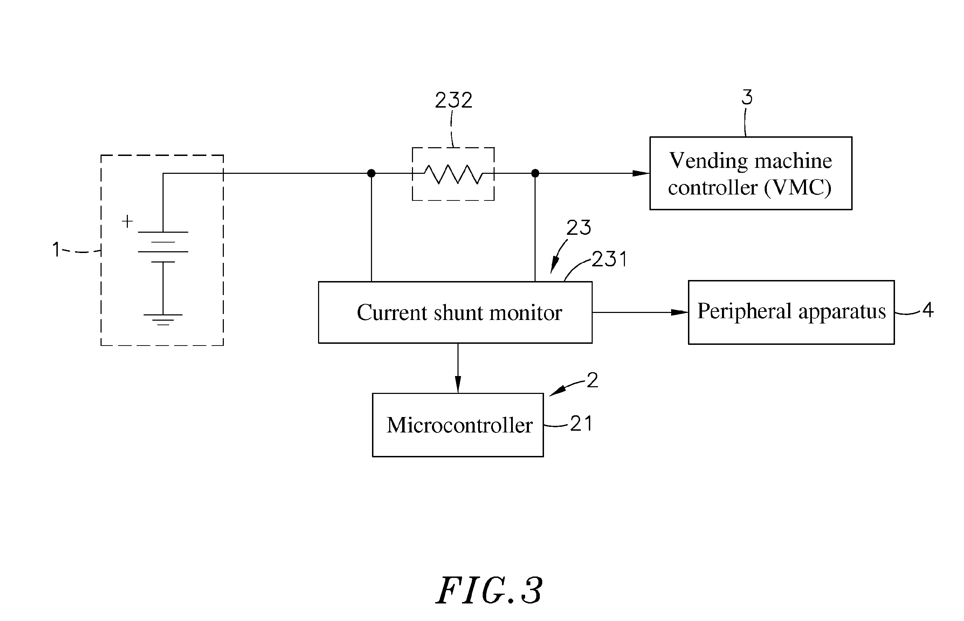

Referring to FIGS. 2 and 3 again, the sense resistor **232** of the current monitoring module **23** of the power monitoring unit **2** in each current shunt monitor **231** converts the electric current passing therethrough into a voltage signal that is delivered through two paralleled current-limit resistors (not shown) to limit the current, and then filtered through a filter capacitor (not shown), and then inputted into IN+/IN- of an INA212, and then fed back to pins of an analog-to-digital converter (ADC) of the microcontroller **21,** enabling the microcontroller **21** to monitor the power consumption status of the peripheral apparatuses **4** through the current monitoring module **23** during the power-saving (sleep) mode or non-power-saving (standby or normal working) mode. If the microcontroller **21** detected an abnormality of the power consumption of one peripheral apparatus **4**, the microcontroller **21** immediately controls the respective third power switch **223** of the power switch module **22** to cut off power supply the peripheral apparatus **4** in trouble, protecting the first rechargeable battery set **14** and the second rechargeable battery set **15** from over-discharge damage. Further, the memory module **24** receives and stores communication data content and/or detection information (such as motor error/service inquire message, transaction messages from the peripheral apparatuses **4** such as received amount, amount of commodity purchased, discharge of commodity and etc., and message of peripheral apparatus abnormality). The management personnel can connect an external USB storage device (not shown) to the connector module **25** to update the internal programs in the motor error/service inquire message, transaction messages from the peripheral apparatuses **4** and to fetch storage data from the memory module **24.** Further, the wireless communication module **26** of the power monitoring unit **2** can transmit data or report message to the remote maintenance center, enabling the management personnel to monitor the operation of the vending machine on the real time at a remote place.

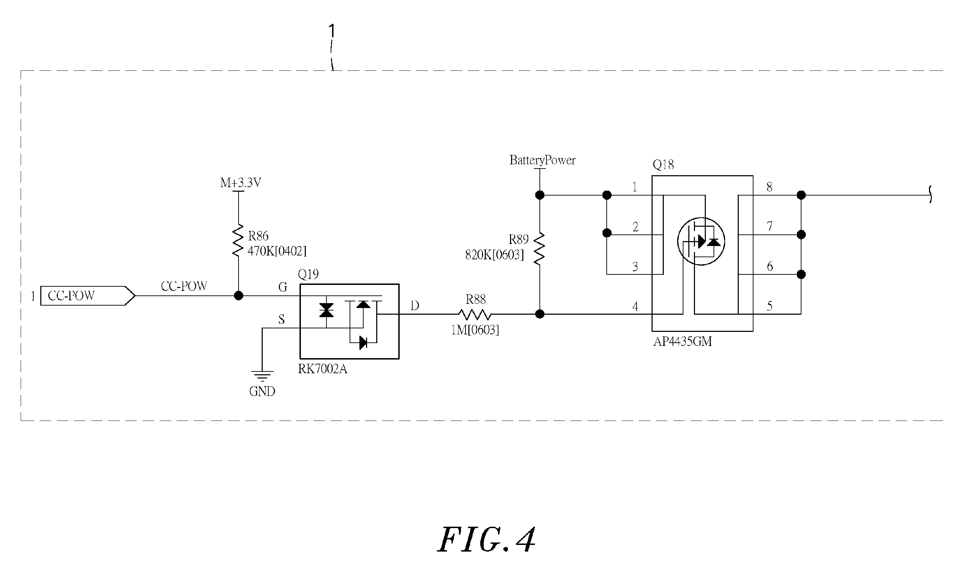

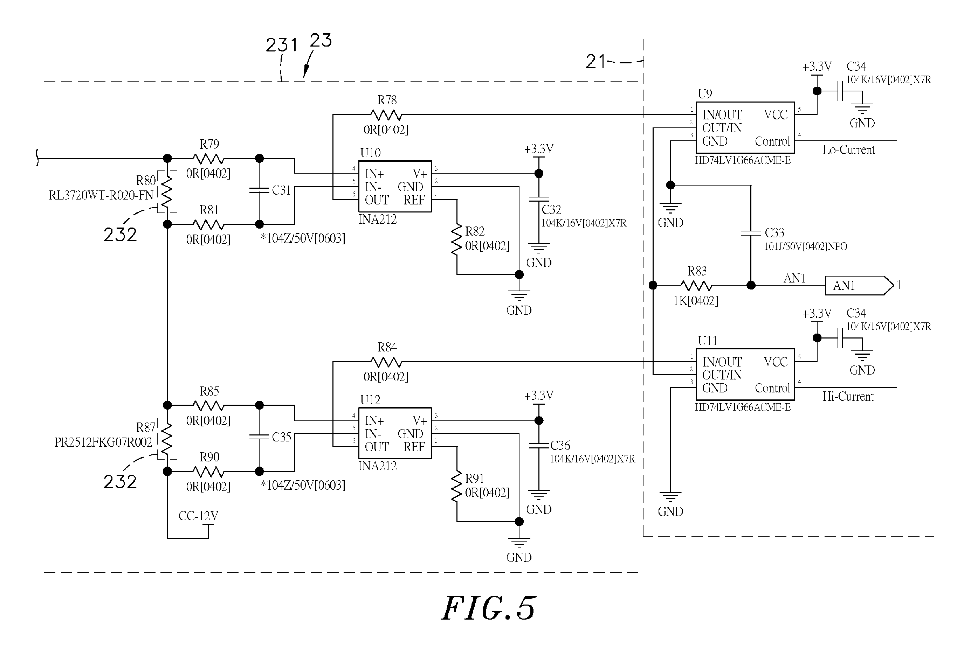

Referring to FIGS. 4 and 5 again, through the analog-to-digital converter (ADC) of the microcontroller **21**, the power monitoring unit **2** measures the quantity of electricity of the first rechargeable battery set **14** and the second rechargeable battery set **15** of the power supply unit **1.** If the battery power of the first rechargeable battery set **14** or the second rechargeable battery set **15** drops below a predetermined low level, the microcontroller **21** will switch off the first power switch **221** of the power switch module **22,** prohibiting the first rechargeable battery set **14** and the second rechargeable battery set **15** of the power supply unit **1** from providing battery power to the vending machine controller (VMC) **3** and the peripheral apparatuses **4** and protecting the first rechargeable battery set **14** and the second rechargeable battery set **15** from over-discharge damage or overheat explosion. Thus, this protection design effectively prolongs the lifespan of the first rechargeable battery set **14** and the second rechargeable battery set **15** of the power supply unit **1.**

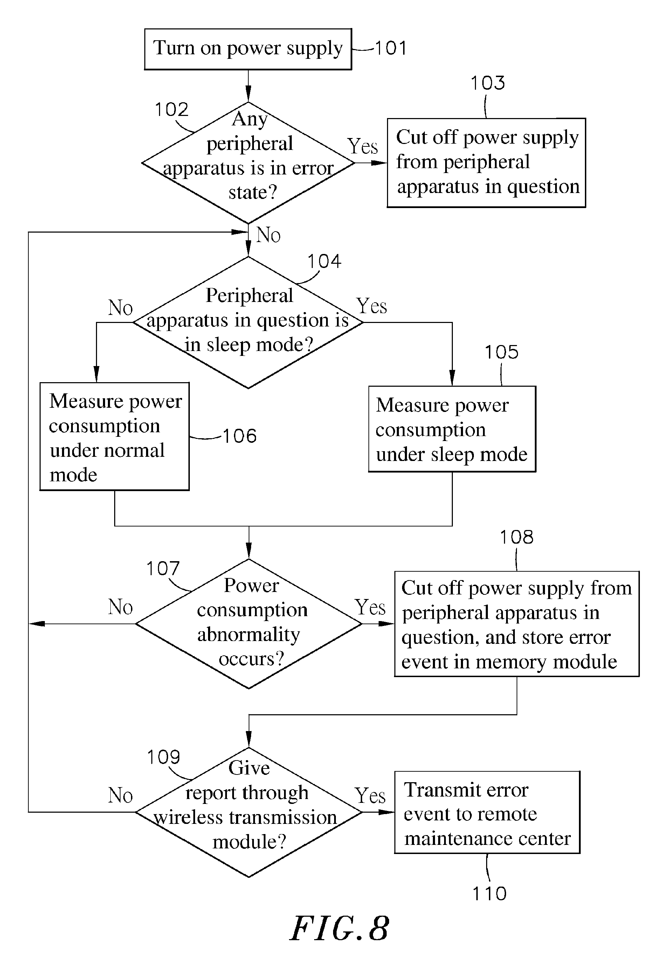

Referring to FIG. 8 and FIGS. 6 and 7 again, the power consumption abnormality monitoring process of the automatic vending machine management control box comprises the steps of:
(101) Turn on power supply
(102) Determine whether or not any peripheral apparatus **4** is in an error state. Then proceed to step (103) if yes, or step (104) if not.
(103) Cut off power supply from the peripheral apparatus **4** in question.
(104) Determine whether or not the peripheral apparatus **4** in question is in the sleep mode. Then proceed to step (105) is yes, or step (106) if not.
(105) Measure power consumption under the sleep mode, and then proceed to step (107).
(106) Measure power consumption under the normal mode, and then proceed to step (107).
(107) Determine whether or not a power consumption abnormality occurs. Then proceed to step (108) if yes, or return to step (104) if not.
(108) Cut off power supply from the peripheral apparatus **4** in question, and store the error event in the memory module **24.**
(109) Determine whether or not to give a warning report through the wireless transmission module **26.**Then proceed to step (110) if yes, or return to step (104) if not.
(110) Transmit the error event to the remote maintenance center.

As stated above, when the microcontroller **21** of the power monitoring unit **2** detected the occurrence of an error event in one peripheral apparatus **4,** it immediately controls the third power switch **223** of the power switch module **22** to cut off power supply from the peripheral apparatus **4** in question. If the peripheral apparatus **4** in question is not in an error state, determine whether or not the peripheral apparatus **4** in question is in the sleep mode. If the peripheral apparatus **4** in question is in the sleep mode, measure the power consumption of the peripheral apparatus **4** in question under the sleep mode, and then determine whether or not a power consumption abnormality occurs. If the power consumption of the peripheral apparatus **4** in question under the sleep mode is abnormal, the microcontroller **21** immediately controls the third power switch **223** of the power switch module **22** to cut off power supply from the peripheral apparatus **4** in question and stores the error event in the memory module **24.** Thereafter, the microcontroller **21** determines whether or not to give a warning report through the wireless transmission module **26.** If a warning report is necessary, the microcontroller **21** will immediately transmit the warning report of the error event through the wireless transmission module **26** to the remote maintenance center, enhancing ease of control.

However, if the peripheral apparatuses **4** are not in the sleep mode, the microcontroller **21** will measure the power consumption of the peripheral apparatus **4** in question under the normal mode, and then determine whether or not a power consumption abnormality occurs. If the power consumption of the peripheral apparatus **4** in question under the normal mode is abnormal, the microcontroller **21** immediately controls the third power switch **223** of the power switch module **22** to cut off power supply from the peripheral apparatus **4** in question and stores the error event in the memory module **24,** and then determines whether or not to give a warning report through the wireless transmission module **26.** If a warning report is necessary, the microcontroller **21** will immediately transmit the warning report of the error event through the wireless transmission module **26** to the remote maintenance center. If the power consumption of the peripheral apparatus **4** in question under the normal mode is normal, the microcontroller **21** will return to the step (104) to determine whether or not the peripheral apparatus **4** in question is in the sleep mode. Thus, if any power consumption abnormality occurred in any peripheral apparatus **4,** the microcontroller **21** will immediately control the third power switch **223** of the power switch module **22** to cut off power supply from the peripheral apparatus **4** in question, protecting the first rechargeable battery set **14** and the second rechargeable battery set **15** from over-discharge damage or overheat explosion.

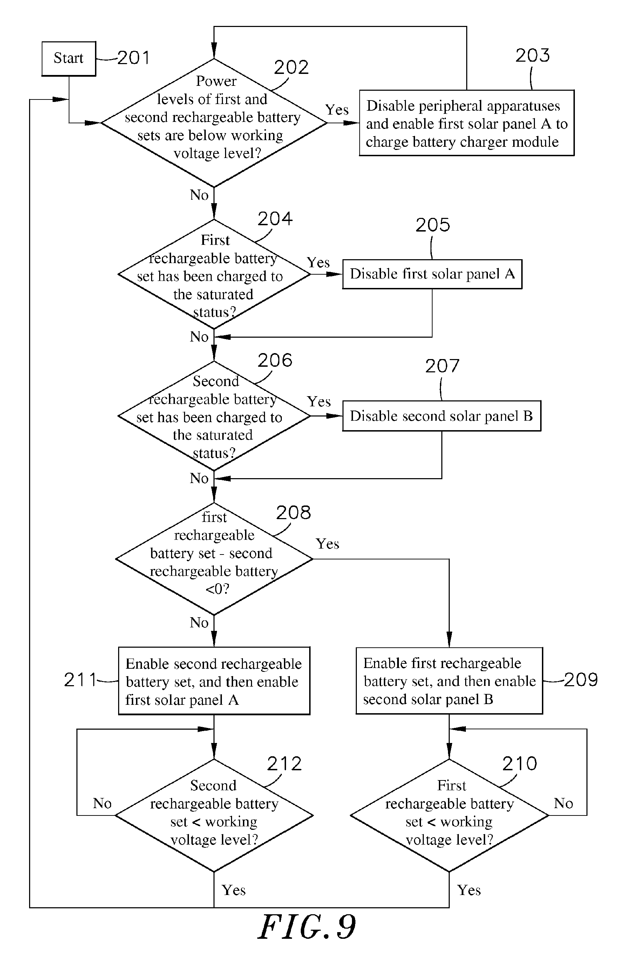

Referring to FIG. 9 and FIGS. 6 and 7 gain, the battery charger power level monitoring and charge switching process of the automatic vending machine management control box comprises the steps of:
(201) Start
(202) Determine whether or not the power levels of the first rechargeable battery set **14** and the second rechargeable battery set **15** are below a predetermined working voltage level. Then proceed to step (203) if yes, or step (204) if not.
(203) Disable all the peripheral apparatuses **4** and enable the first solar panel A **11** to charge the battery charger module **13,** and then return to step (202).
(204) Determine whether or not the first rechargeable battery set **14** has been charged to the saturated status. Then proceed to step (205) if yes, or step (206) if not.
(205) Disable the first solar panel A **11** and then proceed to step (206).
(206) Determine whether or not the second rechargeable battery set **15** has been charged to the saturated status. Then proceed to step (207) if yes, or step (208) if not.
(207) Disable the second solar panel B **12** and then proceed to step (208).
(208) Determine whether or not the balance left over after subtracting the working voltage of the second rechargeable battery set **15** from the working voltage of the first rechargeable battery set **14** is below zero. Then proceed to step (209) if yes, or step (211) if not.
(209) Enable the first rechargeable battery set **14** to supply battery power supply, and then enable the second solar panel B **12** for battery charging.
(210) Determine whether or not the power level of the first rechargeable battery set **14** is below the predetermined working voltage level. Then return to step (202) if yes, or repeat step (210) if not.
(211) Enable the second rechargeable battery set **15** to supply battery power supply, and then enable the first solar panel A **11** for battery charging.
(212) Determine whether or not the power level of the second rechargeable battery set **15** is below the predetermined working voltage level. Then return to step (202) if yes, or repeat step (212) if not.

As stated above, when the microcontroller **21** of the power monitoring unit **2** detected that the working voltage of the first rechargeable battery set **14** and the second rechargeable battery set **15** are below the predetermined working voltage level, the microcontroller **21** will immediately disable all the peripheral apparatuses **4** and enable the battery charger module **13** to charge the first rechargeable battery set **14** with the first solar panel A **11.** After the first rechargeable battery set **14** has been charged to the saturated status, the battery charger module **13** will be controlled to disable the first solar panel A **11** to stop from charging the first rechargeable battery set **14.** If the first rechargeable battery set **14** is not in the saturated status, the microcontroller **21** will determine whether or not the second rechargeable battery set **15** has been charged to the saturated status. If the second rechargeable battery set **15** is in the saturated status, the microcontroller **21** will disable the battery charger module **13** from charging the first rechargeable battery set **14** with the first solar panel A **11.** Thereafter, the microcontroller **21** will determine whether or not the balance left over after subtracting the working voltage of the second rechargeable battery set **15** from the working voltage of the first rechargeable battery set **14** is below zero. If the balance is below zero, the microcontroller **21** will immediately control the third power switch **223** of the power switch module **22** to cut off power supply from the peripheral apparatus **4** in question and enable the battery charger module **13** to charge the second rechargeable battery set **15** with the second solar panel B **12.** Thereafter, the microcontroller **21** determines whether or not the first rechargeable battery set **14** is below the predetermined working voltage, and then return to step (202) to check the power levels of the first rechargeable battery set **14** and the second rechargeable battery set **15** to be or not to be below the predetermined working voltage level in case the first rechargeable battery set **14** is below the predetermined working voltage. If the voltage level of the first rechargeable battery set **14** is not below the predetermined working voltage level, check again the voltage level of the first rechargeable battery set **14** to be below or not below the predetermined working voltage, and this procedure will be repeated again and again till that the voltage level of the first rechargeable battery set **14** is below the predetermined working voltage. Once the voltage level of the first rechargeable battery set **14** is below the predetermined working voltage, the microcontroller **21** will immediately return to step (202).

Further, if the balance left over after subtracting the working voltage of the second rechargeable battery set **15** from the working voltage of the first rechargeable battery set **14** is not below zero (i.e., ≧ 0), the microcontroller **21** will immediately control the power switch module **22** to enable the second rechargeable battery set **15** for outputting battery power and also enable the battery charger module **13** to charge the first rechargeable battery set **14** with the first solar panel A **11.** Thereafter, the microcontroller **21** will determine whether or not the power level of second rechargeable battery set **15** is below the predetermined working voltage level. If the power level of second rechargeable battery set **15** is below the predetermined working voltage level, the microcontroller **21** will immediately return to step (202) to check the power levels of the first rechargeable battery set **14** and the second rechargeable battery set **15** to be or not to be below the predetermined working voltage level. If the second rechargeable battery set **15** is not below the predetermined working voltage level, the microcontroller **21** will repeatedly check the power level of second rechargeable battery set **15** to be below or not below the predetermined working voltage level till that the voltage level of the second rechargeable battery set **15** is below the predetermined working voltage. Once the voltage level of the second rechargeable battery set **15** is below the predetermined working voltage, the microcontroller **21** will immediately return to step (202). Thus, the power monitoring unit **2** can control the battery charger module **13** of the power supply unit **1** to enable/disable the first solar panel A **11** and the second solar panel B **12** for charging the first rechargeable battery set **14** or the second rechargeable battery set **15,** protecting the first rechargeable battery set **14** and the second rechargeable battery set **15** from over-discharge damage and prolonging the lifespan of the first rechargeable battery set **14** and the second rechargeable battery set **15.**

In conclusion, the invention provides an automatic vending machine management control box, which comprises a power supply unit **1,** which comprises a first solar panel A **11** and a second solar panel B **12** arranged in parallel, a battery charger module **13** electrically connected with the first solar panel A **11** and the second solar panel B **12** for receiving electrical energy therefrom, and a first rechargeable battery set **14** and a second rechargeable battery set **15** respectively electrically connected to and chargeable by the battery charger module **13,** a vending machine controller (VMC) **3,** a plurality of peripheral apparatuses **4**, and a power monitoring unit **2**, which comprises a microcontroller **21** adapted for controlling the battery charger module **13** to charge the first rechargeable battery set **14** or the second rechargeable battery set **15** with the first solar panel A **11** or the second solar panel B **12**, a power switch module **22** controllable by the microcontroller **21** to switch on/off the connection between the first rechargeable battery set **14** and the second rechargeable battery set **15**, the vending machine controller (VMC) **3** and each of the peripheral apparatuses **4** and a current monitoring module **23** comprising a plurality of current shunt monitors **231** and adapted for monitoring power consumption status of the peripheral apparatuses **4** under the power-saving mode or normal mode so that the microcontroller **21** can control the power switch module **22** to cut off power supply from each peripheral apparatuses **4** in trouble, protecting the first rechargeable battery set **14** and the second rechargeable battery set **15** from over-discharge damage and prolonging the lifespan of the first rechargeable battery set **14** and the second rechargeable battery set **15..**

Although a particular embodiment of the invention has been described in detail for purposes of illustration, various modifications and enhancements may be made without departing from the spirit and scope of the invention. Accordingly, the invention is not to be limited except as by the appended claims.

## Claims

1. An automatic vending machine management control box, comprising:
a power supply unit comprising a first solar panel A and a second solar panel B arranged in parallel, a battery charger module electrically connected with said first solar panel A and said second solar panel B for receiving electrical energy therefrom, and a first rechargeable battery set and a second rechargeable battery set respectively electrically connected to and respectively chargeable by said first solar panel A and said second solar panel B through said battery charger module;
a vending machine controller (VMC);
a plurality of peripheral apparatuses; and
a power monitoring unit comprising a microcontroller electrically coupled with said first rechargeable battery set and said second rechargeable battery set of said power supply unit and adapted for measuring the quantity of electricity of said first rechargeable battery set and said second rechargeable battery set and controlling said battery charger module to charge said first rechargeable battery set and said second rechargeable battery set, a power switch module electrically coupled with said microcontroller, said first rechargeable battery set and said second rechargeable battery set of said power supply unit, said vending machine controller (VMC) and said peripheral apparatuses and controllable by said microcontroller to switch on/off the connection between said first rechargeable battery set, said second rechargeable battery set, said vending machine controller (VMC) and each said peripheral apparatus, and a current monitoring module comprising electrically coupled between said power switch module and said peripheral apparatuses, said current monitoring module comprising at least one current shunt monitor electrically coupled to said microcontroller and adapted for monitoring power consumption status of each said peripheral apparatus for enabling said microcontroller to control said power switch module in cutting off power supply from each said peripheral apparatus that is abnormal in power consumption.

2. The automatic vending machine management control box as claimed in claim 1, wherein said power switch module comprises a first power switch electrically coupled with said microcontroller and said first rechargeable battery set and said second rechargeable battery set of said power supply unit and controlled by said microcontroller to switch on/off said first rechargeable battery set and said second rechargeable battery set, a second power switch electrically coupled with said microcontroller, said first power switch and said vending machine controller (VMC) and controlled by said microcontroller to switch on/off said vending machine controller (VMC), and a plurality of third power switches respectively electrically coupled with said microcontroller, said second power switch and said peripheral apparatuses and respectively controllable by said microcontroller to switch on/off said peripheral apparatuses.

3. The automatic vending machine management control box as claimed in claim 1, wherein each said current shunt monitor of said current monitoring module comprises a sense resistor therein for converting the electric current passing therethrough into a voltage signal and transmitting the voltage signal to said microcontroller for determining the power consumption status of said peripheral apparatuses.

4. The automatic vending machine management control box as claimed in claim 1, wherein said power monitoring unit further comprises a memory module, said memory module comprising a flash RAM (random access memory) and a FRAM (ferroelectric random access memory) electrically coupled to said microcontroller for recording transaction data, error message, abnormality events and predetermined data.

5. The automatic vending machine management control box as claimed in claim 4, wherein said power monitoring unit further comprises a wireless transmission module electrically coupled to said microcontroller for wireless communication with a remote maintenance center to transmit storage data from memory module to said remote maintenance center, said wireless communication module being configured subject to GSM, GPRS, RF or 3G technology.

6. The automatic vending machine management control box as claimed in claim 1, wherein said power monitoring unit further comprises a connector module electrically coupled to said microcontroller for a wired connection of an external device.

7. The automatic vending machine management control box as claimed in claim 1, wherein said vending machine controller (VMC) is electrically coupled with said microcontroller of said power monitoring unit and said peripheral apparatuses by a respective series bus interface.

8. The automatic vending machine management control box as claimed in claim 7, wherein said series bus interface is selected from the group of multi-drop bus (MDB) and RS-232 interface.

9. The automatic vending machine management control box as claimed in claim 1, wherein each said peripheral apparatus is selected from the group of card reader, document checker, bill acceptor, coin changer and coin acceptor.
